Europäisches Patentamt

European Patent Office

Office européen des brevets

(11) Veröffentlichungsnummer: **0 407 705 A1**

(12) **EUROPÄISCHE PATENTANMELDUNG**

(21) Anmeldenummer: **90109160.3**

(22) Anmeldetag: **15.05.90**

(51) Int. Cl.⁵: **G01G 19/08**, B60P 5/00

(30) Priorität: **13.07.89 DE 3923198**

(43) Veröffentlichungstag der Anmeldung:
**16.01.91 Patentblatt 91/03**

(84) Benannte Vertragsstaaten:
**DE FR GB IT NL**

(71) Anmelder: **MOBA-ELECTRONIC GESELLSCHAFT FÜR MOBIL-AUTOMATION**
**Vor den Eichen 4**
**D-6254 Elz(DE)**

(72) Erfinder: **Harms, Paul, Dipl.-Ing.**
**Bornstrasse 22**
**D-6253 Hadamar-Steinbach(DE)**
Erfinder: **Paul, Bernd**
**Niedertiefenbacher Weg 15 a**
**D-6258 Runkel/Dehrn(DE)**

(74) Vertreter: **Schoppe, Fritz, Dipl.-Ing.**
**Seitnerstrasse 42**
**D-8023 Pullach bei München(DE)**

(54) **Traktorwaage.**

(57) Eine Traktorwaage (3) zum Erfassen des Gewichts eines Traktorsatzgerätes (4) hat einen traktorseitigen Rahmen und einen geräteseitigen Rahmen.

Zum Erzielen einer hohen Überlastfestigkeit bei hoher Meßgenauigkeit ist der traktorseitige Rahmen mit dem geräteseitigen Rahmen lediglich mit einer Mehrzahl von Wägestäben verbunden, wobei die Traktorwaage eine Neigungsmeßvorrichtung umfasst, aus deren Ausgangssignal eine Auswerteschaltung einen Korrekturfaktor ableitet, mit dem das Gewichtssignal von den Wägestäben kompensiert wird.

FIG.1

EP 0 407 705 A1

## TRAKTORWAAGE

Die vorliegende Erfindung betrifft eine Traktorwaage nach dem Oberbegriff des Patentanspruchs 1.

Insbesondere befaßt sich die vorliegende Erfindung mit einer Traktorwaage, die zum Erfassen des Gewichtes eines an einen Taktor angebauten Traktor-Zusatzgerätes dient. In vielen Anwendungsbereichen in der Landwirtschaft ist es erforderlich, das momentane Gewicht eines an einen Traktor angebauten Traktor-Zusatzgerätes oder dessen Befüllung zu überwachen. Derartige Traktor-Zusatzgeräte sind üblicherweise Düngerstreuer, Sämaschinen oder Feldspritzen. Derartige Traktorwaagen müssen mit einer hohen Genauigkeit und Auflösung von etwa 1 kg bei einem Meßbereich von bis zu 1.500 kg arbeiten, um der Bedienungsperson hinreichend genaue Daten für die Einstellung der Arbeitsweisen der jeweiligen Zusatzgeräte an die Hand zu geben. So liegt es beispielsweise auf der Hand, daß im Falle eines Düngerstreuers als Traktor-Zusatzgerät die pro Wegstrecke des Traktors ausgebrachte Düngermenge mit einer Genauigkeit von wenigen Prozenten ausdosiert werden muß, da einerseits der landwirtschaftliche Ertrag bei einer Unterdüngung stark abnimmt und andererseits im Falle einer Überdüngung neben den für die überschüssige Düngermenge aufgewandten Kosten auch die durch die Überdüngung verursachten Umweltbelastungen als nicht hinnehmbar anzusehen sind.

Aus diesem Grunde ist es bereits seit einigen Jahren üblich, Traktor-Zusatzgeräte mit sogenannten Traktorwaagen auszustatten. Traktorwaagen müssen nicht nur den obenerläuterten Genauigkeitsanforderungen genügen, sondern es muß insbeson dere gewährleistet sein, daß die im rauhen landwirtschaftlichen Alltag auftretenden Belastungen, die auf das Traktor-Zusatzgerät einwirken und somit von der Traktorwaage auf den Traktor zu übertragen sind, nicht zu Beschädigungen führen. Zur Verdeutlichung derartiger Anforderungen an die Überlastfestigkeit der Traktorwaage sollte man sich die dynamischen Vorgänge vor Augen halten, die auftreten, wenn ein Traktor mit vielfältigen dynamischen Roll- und Kippbewegungen über eine landwirtschaftliche Bodenfläche fährt, die zu impulsartigen dynamischen Belastungen führen, welche zwischen dem bis zu 1,5 t wiegenden Traktor-Zusatzgerät und dem Traktor auftreten, wobei die Kopplung zwischen Traktor und Traktor-Zusatzgerät notwendigerweise über die Traktorwaage erfolgt. Um derartige dynamische Belastungen vom Traktor-Zusatzgerät auf den Traktor bzw. die Traktoraufhängung zu übertragen, ist es bislang im Bereich der Traktorwaagen mit großen Meßbereichen von bis zu 1.500 kg üblich, zwischen der Traktoraufhängung und dem Traktor-Zusatzgerät Gelenke, Führungsmittel und Stützmittel vorzusehen, um dynamische Belastungen aufgrund von seitlichen Bewegungen oder Drehbewegungen oder Nickbewegungen von den Meßelementen der Traktorwaage fernzuhalten. Derartige zusätzliche Mittel zum Erhöhen der dynamischen Stabilität der Aufhängung des Traktor-Zusatzgerätes an der Traktoraufhängung bedingen jedoch Kraftnebenschlüsse, die der erzielbaren Meßgenauigkeit der Traktorwaage Grenzen setzen.

Ein weiteres Problem der bekannten Traktorwaage liegt darin, daß diese nur dann Meßergebnisse mit einer hinreichenden Genauigkeit liefert, wenn der Traktor auf einer im wesentlichen horizontalen Ebene fährt. Diese Voraussetzung ist jedoch bei landwirtschaftlichen Bodenflächen praktisch niemals erfüllt.

Aus der DE-C2-35 39 825 ist eine Traktorwaage der oben beschriebenen Art bekannt. Bei dieser Traktorwaage sind die zwischen der Traktoraufhängung und dem Traktorzusatzgerät bzw. zwischen dem traktorseitigen Rahmen und dem geräteseitigen Rahmen angeordneten Gelenke und Führungsmittel durch vier horizontal verlaufende Blattfedern gebildet, die zur Vertikalführung des geräteseitigen Rahmens gegenüber dem traktorseitigen Rahmen dienen sollen. An einem Querbalken des geräteseitigen Rahmens ist ein auf Druck belastbarer Drucksensor angeordnet, auf dem während des Meßvorganges der geräteseitige Rahmen mit seiner gesamten Gewichtskraft gegenüber dem traktorseitigen Rahmen abgestützt ist. Eine derartige Anordnung ist lediglich für statische Messungen geeignet und ist nicht ausreichend überlastfähig, um dynamischen Belastungen während des Fahrbetriebes des Traktors zu widerstehen. So wird in Spalte 4, Zeilen 7 bis 22 dieser Schrift auch darauf hingewiesen, daß es bei dieser Traktorwaage wesentlich für die Verfahrbarkeit des Traktors sei, daß zum Verfahren des Traktors der Lastrahmen gegenüber dem geräteseitigen Rahmen durch ein Gewinde verriegelt werden kann, so daß ein Schwingen des geräteseitigen Rahmens gegenüber dem traktorseitigen Rahmen verhindert wird und zugleich der Lastgeber vollständig entlastet wird. Um grobe Fehlmessungen durch Schieflage der Wägevorrichtung zu vermeiden, weist die bekannte Traktorwaage ferner ein Pendel auf, daß eine zu starke Schieflage des Traktors durch entsprechende Pendelauslenkung anzeigt. Diese bekannte Traktorwaage ist somit für dynamische Messungen während der Fahrt des Traktors nicht geeignet, weist aufgrund der erforderlichen Führungsmittel des geräteseitigen Rahmens gegenüber dem traktorseitigen Rahmen Kraftnebenschlüsse auf, die zu Meßfehlern führen könne, und liefert nur dann Meßergebnisse mit akzeptabler Genauigkeit, wenn sich der Traktor auf einer im wesentlichen horizontalen Ebene stehend befindet.

Aus der DE-A1-32 20 143 ist es bekannt, zur Erfassung der Lademenge der Ladeschaufel eines Hydraulikbaggers das Gewicht des Schaufelinhaltes abzuleiten aus dem Hydraulikdruck der Kolben-Zylinder-Einheit der angehobenen Ladeschaufel, aus einem erfaßten Winkel des Auslegerstieles der Ladeschaufel und aus Tabellenwerten, die mit diesen Eingangsgrößen ausgelesen werden. Mit überlastfesten, dynamisch belastbaren und hochgenau messenden Traktorwaagen befaßt sich diese Schrift nicht.

Aus der EP-B1-00 46 692 ist eine Gabelstapler-Wägeeinrichtung für das Wiegen von auf der Gabel eines Gabelstaplerfahrzeugs plazierten Gegenständen bekannt, bei der zwischen einem Rahmen, an denen die Gabeln des Gabelstaplers angreifen, und einem gabelstaplerseitigen Rahmen vier Wägestäbe angeordnet sind, die an den Eckpunkten eines Rechteckes liegen. Auf den Wägestäben sind Dehnungsmeßstreifen vorgesehen, die ein Meßsignal erzeugen, das proportional zu der auf die Gabeln einwirkenden Gewichtskraft ist. Da ein Gabelstapler auf im wesentlichen ebenen Industrieböden eingesetzt wird, treten derart starke dynamische Probleme, wie sie bei Traktorwaagen vorliegen,in diesem Anwendungsgebiet nicht auf. Bei Gabelstapler-Wägeeinrichtungen tritt naturgemäß auch die oben unter Bezugnahme auf die bekannte Traktorwaage erläuterte Problematik der Beeinträchtigung der Meßgenauigkeit durch schräge Standflächen des Gabelstaplers nicht auf.

Gegenüber diesem Stand der Technik liegt der vorliegenden Erfindung die Aufgabe zugrunde, eine Traktorwaage der eingangs genannten Art so weiter zu bilden, daß sie trotz hoher Überlastfestigkeit eine hohe Auflösung und Meßgenauigkeit auch dann erzielt, wenn sich der Traktor auf unebenen Bodenflächen bewegt.

Diese Aufgabe wird bei einer Traktorwaage nach dem Oberbegriff des Patentanspruchs 1 durch die im kennzeichnenden Teil des Patentanspruchs 1 angegebenen Merkmale gelöst.

Der Erfindung liegt die Erkenntnis zugrunde, daß die Traktorwaage dann trotz hoher Überlastfestigkeit eine hohe Auflösung und Meßgenauigkeit auch bei unebenen Bodenflächen, auf denen der Traktor fährt, liefert, wenn der traktorseitige Rahmen mit dem gerätseitigen Rahmen ausschließlich mit einer Mehrzahl von mit Dehnungsstreifen versehnen Wägestäben verbunden ist und wenn die Traktorwaage ferner eine Neigungsmeßvorrichtung zum Erfassen der Neigung des Traktors aufweist, und eine Auswerteschaltung umfaßt, der sowohl das Gewichtssignal von den Dehnungsnetzstreifen als auch Neigungssignal von der Neigungmeßvorrichtung zugeführt wird, wobei die Auswerteschaltung das von den Dehnungsmeßstreifen erhaltene Gewichtssignal um einen Korrekturfaktor berichtigt, der von dem Neigungssignal abhängt. Mit anderen Worten vermeidet die erfindungsgemäße Traktorwaage die im Stand der Technik auftretenden Meßfehler durch Kraftnebenschlüsse dadurch, daß die beiden Rahmen der Traktorwaage ausschließlich über die Wägestäbe miteinander verbunden sind. Obwohl die Eignung von Wägestab-Waagen im Stand der Technik auf solche Anwendungsfälle beschränkt angesehen worden ist, bei denen gewährleistet ist, daß die Wägestabachsen genau in der Horizontalen liegen, schafft die Erfindung den Einsatz derartiger Wägestäbe bei einer Traktorwaage mit einer sich ständig ändernden räumlichen Lage durch Verwenden einer Neigungsmeßvorrichtung in Verbindung mit einer Auswerteschaltung, in der das Gewichtssignal um einen Korrekturfaktor berichtigt wird, der von dem Neigungssignal abhängt.

Bevorzugte Weiterbildungen der erfindungsgemäßen Traktorwaage sind Gegenstand der Unteransprüche.

Nachfolgend wird unter Bezugnahme auf die beiliegenden Zeichnungen eine bevorzugte Ausführungsform der erfindungsgemäßen Traktorwaage näher erläutert. Es zeigen:

Fig. 1 eine Seitenansicht eines Traktors mit Traktorwaage und Düngerstreuer;

Fig. 2 eine Draufsicht auf einen geräteseitigen Rahmen der Traktorwaage;

Fig. 3 eine Seitenansicht, teilweise in Schnittdarstellung, der Traktorwaage;

Fig. 4 eine Draufsicht auf einen traktorseitigen Rahmen der Traktorwaage;

Fig. 5 eine Seitenansicht, teilweise mit einer Querschnittsdarstellung, eines bei der erfindungsgemäßten Traktorwaage verwendeten Wägestabes;

Fig. 6 ein Schaltungsdiagramm der gegenseitigen Verschaltung von Dehnungsmeßstreifen der Wägestäbe der erfindungsgemäßen Traktorwaage;

Fig. 7 eine diagrammartige Darstellung der Funktionsweise eines als Scherstab ausgebildeten Wägestabes; und

Fig. 8 ein Blockdiagramm der Erfindungsgemäßen Traktorwaage mit Neigungsmeßvorrichtung.

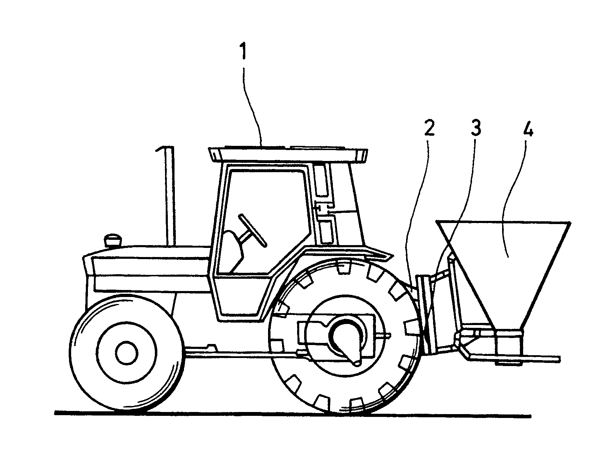

Wie in Fig. 1 gezeigt ist, hat ein Traktor 1 eine traktorseitige, serienmäßige Aufhängung 2, an der eine Traktorwaage befestigt ist, die in ihrer Gesamtheit mit dem Bezugszeichen 3 bezeichnet ist. An der Traktorwaage 3 ist wiederum ein Düngerstreuer 4 befestigt.

Die Traktorwaage 3 dient zum Erfassen des Gewichtes des Düngerstreuers 4. Für den Fachmann ist es offensichtlich, daß anstelle des gezeigten Düngersteuers 4 auch jegliches anderes Traktor-Zusatzgerät über die Traktorwaage 3 mit dem Traktor 1 verbunden sein kann, dessen Gewicht mittels der Traktorwaage 3 zu erfassen ist. Nur beispielsweise sei auf Traktor-Zusatzgeräte wie Sämaschinen oder Feldspritzen hingewiesen.

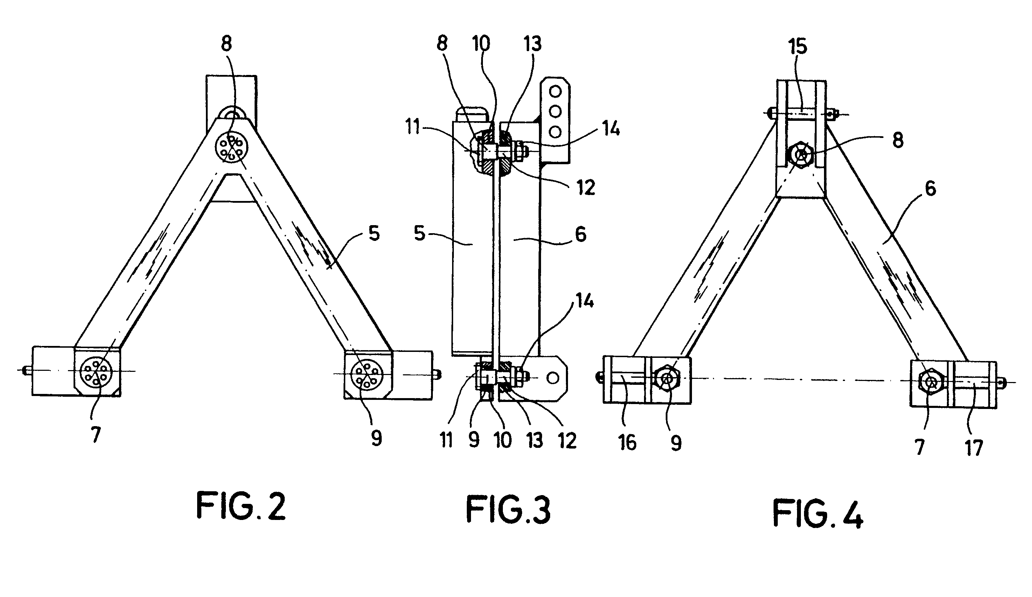

Nachfolgend wird der Aufbau der Traktorwaage unter Bezugnahme auf die Fig. 2 bis 4 näher erläutert. Die Traktorwaage 3 umfaßt einen geräteseitigen Rahmen 5, der in Fig. 2 in einer auf den Traktor gerichteten Darstellung gezeigt ist, sowie einen traktorseitigen Rahmen 6, der in Fig. 4 in einer auf das Gerät gerichteten Darstellung gezeigt ist.

Wie aus Fig. 3 zu erkennen ist, stellt die einzige Verbindung zwischen dem traktorseitigen Rahmen 6 und dem geräteseitigen Rahmen 5 eine Dreiecksanordnung von drei Wägestäben 7, 8, 9 dar.

Wie insbesondere in Fig. 3 gezeigt ist, sind die Wägestäbe 7, 8, 9 in Ausnehmungen 10 des geräteseitigen Rahmens 5 angeordnet und mit diesen jeweils mittels einer Mehrzahl von Schrauben im Bereich ihrer Fußplatten 11 verschraubt. Ein der Fußplatte 11 gegenüberliegender verjüngter Teil 12 eines jeden Wägestabes 7, 8, 9 erstreckt sich durch eine Bohrung 13 des traktorseitigen Rahmens 6 und ist mittels einer Schraubverbindung 14, die sich an das von der Fußplatte 11 abgewandte Ende des verjüngten Teiles 12 des Wägestabes 7, 8, 9 anschließt, mit dem traktorseitigen Rahmen 6 fest verbunden.

Der traktorseitige Rahmen 6 umfaßt eine Oberlenkeraufhängung 15 sowie Unterlenkeraufhängungen 16, 17.

Die Verbindung des geräteseitigen Rahmens 5 mit dem Gerät, das im Beispielsfall der Düngerstreuer 4 ist, erfolgt entweder durch einen kurzen Oberlenker und zwei Fanghaken oder durch eine sogenannte Accord-Schnellkupplung, mit der das Gerät 4 hebbar und automatisch verriegelbar ist.

Wie aus den Fig. 2 und 4 ersichtlich ist, sind bei der gezeigten bevorzugten Ausführungsform die Wägestäbe 7, 8, 9 derart angeordnet, daß deren Achsen die Eckpunkte eines gleichschenkligen Dreiecks bilden, wobei die Spitze des gleichschenkligen Dreiecks durch den oberen Wägestab 8 gebildet wird, der in vertikaler Richtung oberhalb der anderen, auf gleicher vertikaler Höhe angeordneten und die Dreiecksbasis festlegenden Wägestäbe 7, 9 angeordnet ist.

Eine besonders gute Überlastfestigkeit der Traktorwaage gegen jegliche angreifende dynamische Überlastspitzen wird dadurch erzielt, daß die Anordnung der Achsen der Wägestäbe die Form eines Dreiecks bildet, das vorzugsweise gleichseitig ist.

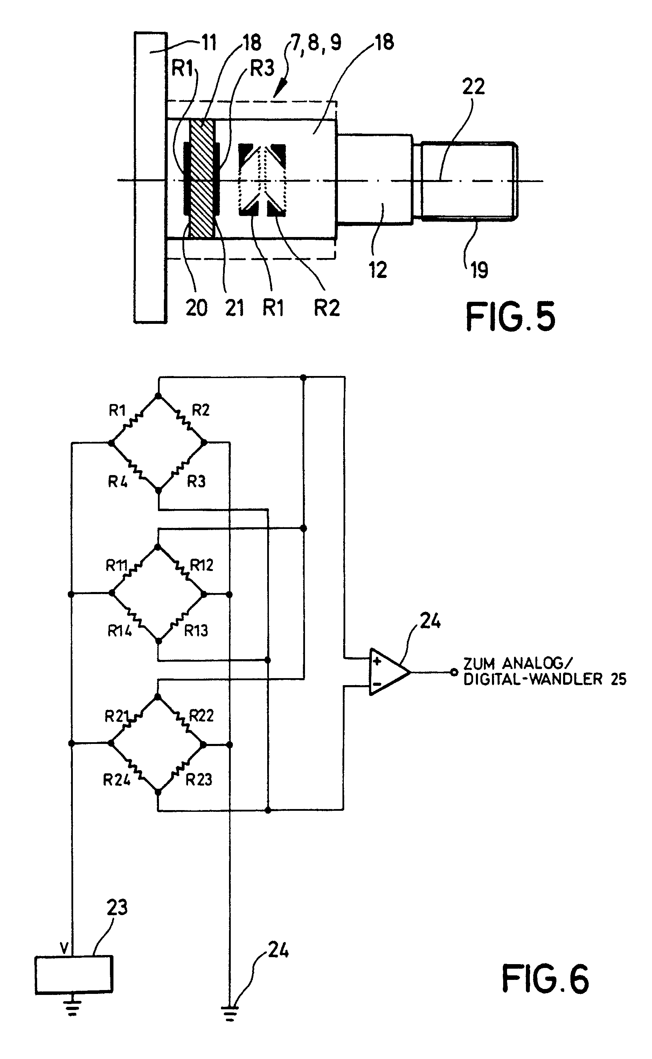

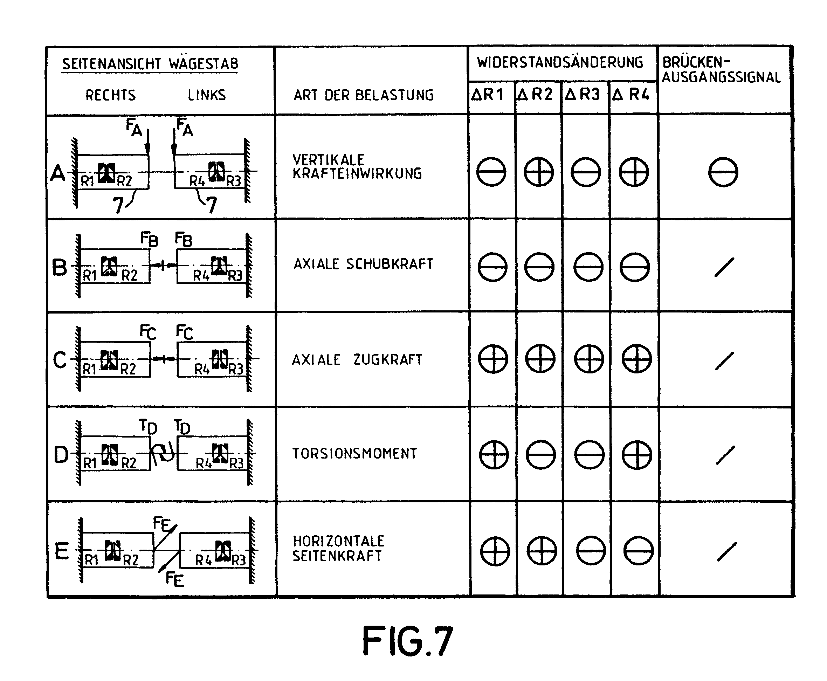

Wie in Fig. 5 gezeigt ist, sind die Wägestäbe 7, 8, 9 vorzugsweise als Scherstäbe ausgebildet. Diese umfassen, wie bereits erwähnt, die Fußplatte 11, an die ein im Querschnitt rechteckförmiger Erfassungsbereich 18 anschließt, der in den verjüngten Teil 12 übergeht, an den sich ein Gewindeabschnitt 19 anschließt, der einen Teil der in Fig. 3 gezeigten Schraubverbindung 14 bildet. Auf jeder Flachseite 20, 21 des Erfassungsbereiches 18 sind im Bereich der biegeneutralen Achse 22 zwei Dehnungsmeßstreifen R1, R2; R3, R4; R11, R12; R13, R14; R21, R22; R23, R24 angeordnet. Die Scherspannungsmaxima treten unter 45 Grad zur Längsachse 22 des Wägestabes 7, 8, 9 mit entgesetztem Vorzeichen und gleichem Betrag in zueinander senkrechten Richtungen auf. Entsprechend sind die Dehnungsmeßstreifen angeordnet. Die Funktion eines derartigen als Scherstab ausgestalteten Wägestabes 7, 8, 9 wird später unter Bezugnahme auf Fig. 7 näher erläutert.

Nachfolgend wird unter Bezugnahme auf Fig. 6 die Verschaltung der Dehnungsmeßstreifen R1 bis R24 mit einer Auswerteelektronik erläutert.

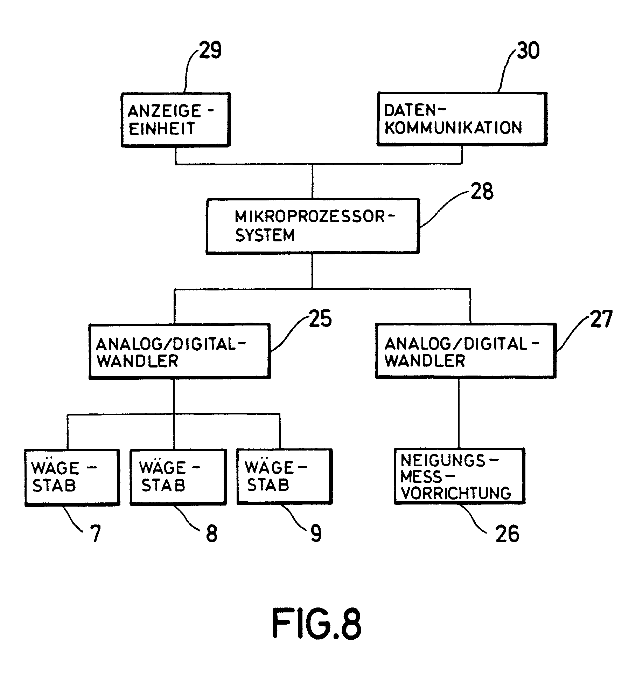

Die vier Dehnungsmeßstreifen R1, R2, R4, R4; R11, R12, R13, R14; R21, R22, R22, R24 der Wägestäbe 7, 8, 9 sind jeweils Wheatstone'scher Brückenschaltung verschaltet, wobei an jede Wheatstone'sche Brückenschaltung eine konstante Spannung angelegt wird, die durch eine Spannungsquelle 23 gegenüber Masse 24 erzeugt wird. Die (Strom-) Ausgangssignale der drei Brückenschaltungen werden dem Eingang bzw. Ausgang eines Verstärkers 24 in summativer Weise zugeführt. Das Ausgangssignal des Verstärkers 24 wird einem Analog-Digital-Wandler 25 zugeführt, wie später in der Beschreibung unter Bezugnahme auf Fig.8 weiter verdeutlicht wird.

Nachfolgend wird unter Bezugnahme auf Fig. 7 die Kompensationsfunktion der Brückenschaltung der als Scherstab ausgestalteten Wägestäbe 7, 8, 9 schematisch erläutert. Zunächst wird der Fall betrachtet, daß allein eine Gewichtskraft $F_A$ vertikal auf den Scherstab einwirkt, wie dies in Fig. 7A zu sehen ist. Eine derartige Gewichtskraft $F_A$ bewirkt eine Längung und somit Widerstandswerterhöhung der Dehnungsmeß streifen R2, R4 und eine Stauchung und somit Widerstandswertverminderung der Dehnungsmeßstreifen R1, R3, wodurch ein entsprechendes Brückenausgangssignal erzeugt wird.

Wenn, wie dies in Fig. 7B gezeigt ist, eine axiale Schubkraft $F_B$ auftritt, bewirkt diese eine gleichmäßige Stauchung und somit Widerstandswertverminderung sämtlicher Dehnungsmeßstreifen, so daß kein Brückenausgangssignal entsteht.

Bei Auftreten einer axialen Schubkraft $F_C$, wie dies in Fig. 7C angedeutet ist, werden sämtliche Dehnungsmeßstreifen R1 bis R4 gelängt und somit in ihrem Widerstandswert erhöht. Gleichfalls wird kein Brückenausgangssignal erzeugt.

Bei Auftreten eines Torsionsmomentes $T_D$, das in Fig. 7D gezeigt ist, kommt es zu einer Längung und somit Widerstandswerterhöhung der Dehnungsmeßstreifen R1 und R4 und zu einer Stauchung und somit Widerstandsverminderung der Dehnungsmeßstreifen R2, R3, so daß gleichfalls kein Brückenausgangssignal entsteht.

Das Angreifen einer horizontalen Seitenkraft $F_E$, das in Fig. 7E schemenhaft dargestellt ist, führt zu einer gleichmäßigen Widerstandswerterhöhung der Dehnungsmeßstreifen R1, R2 auf einer Flachseite 20 und zu einer entsprechenden Widerstandswertverminderung der Dehnungsmeßstreifen R3, R4 der Dehnungsmeßstreifen auf der anderen Flachseite 21, so daß auch hier kein Brückenausgangssignal entsteht.

Damit ist der Scherstab in gewünschter Weise nur empfindlich gegenüber vertikalen Kräften $F_A$, jedoch unempfindlich gegen sämtliche auftretenden mechanischen Störgrößen $F_B$, $F_C$, $T_D$ und $F_E$.

Nachfolgend wird unter Bezugnahme auf Fig. 8 ein Blockdiagramm der erfindungsgemäßen Traktorwaage näher erläutert. Die Wägestäbe 7, 8, 9, die miteinander in der mit Fig. 6 gezeigten Art verschaltet sein können, stehen vorzugsweise über den Verstärker 24 (vgl. Fig. 6) mit dem Analog-Digital-Wandler 25 in Verbindung. Der Analog-Digital-Wandler 25 ist seinerseits mit einem Eingangsdatenbus eines Mikroprozessorsystems 28 verbunden.

Eine Neigungsmeßvorrichtung 26, deren Ausgangssignale die Neigung des Traktors in der x- und y-Richtung analog darstellen, steht mit dem Eingang eines weiteren Analog-Digital- Wandlers 27 in Verbindung, der seinerseits ausgangsseitig mit einem Eingangsdatenbus des Mikroprozessorsystems 28 verbunden ist. Dieses ist ausgangsseitig mit einer Anzeigeeinheit 29 verbunden, auf der das neigungskompensierte Gewicht des Traktor-Zusatgerätes oder dessen Befüllung angezeigt wird. Ferner ist der Ausgang des Mikroprozessorsystem 28 mit einer Datenkomunikationseinheit 30 verbunden, beispielweise als mobile Speichereinrichtung zum Übertragen von Daten vom Traktor zu einem ortsfesten Computer ausgeführt sein kann. Das Mikroprezssorsystem korrigiert das vom Analog-Digital-Wandler 25 erhaltenen digitalisierte Gewichtssignal um einen Korrekturfaktor, der von dem vom Analog-Digital-Wandler 27 erhaltenen digitalisierten Neigungssignal abhängt.

Der Korrekturfaktor kann (sowohl für die x- als auch für die y-Richtung) mathematisch ermittelt werden, indem als Korrekturfaktor der Kehrwert des Kosinus des durch das Neigungssignal dargestellten Neigungswonkels verwendet wird.

Bei einer bevorzugten Ausführungsform umfasst die erfindungsgemäße Traktorwaage innerhalb des Mikropozessorsystems 28 einen (nicht dargestellten) Festwertspeicher, in dem eine Festwertspeichertabelle abgespeichert ist. Auf diese Festwertspeichertabelle wird durch das digitalisierte Neigungssignal zugegeriffen. In der Tabelle sind für verschiedene Neigungssignale Korrekturfaktoren abgespeichert, die empirisch dadurch ermittelt worden sind, daß eine Quotientenbildung des Gewichtssignales bei ungeneigtem Traktor durch das Gewichtssignal bei mit verschiedenen Neigungswinkeln geneigten Traktor vorgenommen wird. Mit einer derartigen empirischen Zuordnung von Korrekturfaktoren zu Neigungsmeßsignalen werden gleichzeitig Nichtlinearitäten der Neigungsmeßvorrichtung sowie geometriebedingte Abweichungen der Lage der Traktorwaage von der Vertikalen bei einem ebenstehenden Traktor kompensiert.

## Ansprüche

1. Traktorwaage
zum Erfassen des Gewichtes eines an einen Traktor (1) angebauten Traktor-Zusatzgerätes (4),
mit einem traktorseitigen Rahmen (6), und
mit einem geräteseitigen Rahmen (5),
dadurch gekennzeichnet,
daß der traktorseitige Rahmen (6) mit dem geräteseitigen Rahmen (5) lediglich mit einer Mehrzahl von mit Dehnungsmeßstreifen (R 1,...,R 24) versehenen Wägestäben (7, 8, 9) verbunden ist,
daß eine Neigungsmeßvorrichtung (26) zum Erfassen der Neigung des Traktors (1) vorgesehen ist,
daß einer Auswerteschaltung (28) ein Gewichtssignal von den Dehnungsmeßstreifen (R 1,...,R 24) und ein Neigungssignal von der Neigungsmeßvorrichtung (26) zugeführt werden, und
daß die Auswerteschaltung (28) das von den Dehnungsmeßstreifen (R 1,...,R 24) erhaltene Gewichtssignal um einen Korrekturfaktor berichtigt, der von dem Neigungssignal abhängt.

2. Traktorwaage nach Anspruch 1, dadurch gekennzeichnet,
daß die Auswerteschaltung das von den Dehnungsmeßstreifen (R1,...,R 24) erhaltene Gewichtssignale mit einem Korrekturfaktor multipliziert, dessen Kehrwert dem Kosinus des durch des Neigungssignal dargestellten Neigungswinkels entspricht.

3. Traktorwaage nach Anspruch 1, dadurch gekennzeichnet,
daß die Auswerteschaltung (28) den jeweiligen Korrekturfaktor unter Zugriff auf eine Festwertspeichertabelle ermittelt, auf die durch das Neigungssignal zugreifbar ist, und
daß die in der Festwertspeichertabelle abgespeicherten Korrekturfaktoren empirisch durch Quotientenbildung des Gewichtssignales bei ungeneigtem Traktor (1) durch das Gewichtssignal bei mit verschiedenen Neigungswinkel geneigten Traktor festgelegt sind.

4. Traktorwaage nach einem der Ansprüche 1 bis 3, dadurch gekennzeichnet,

daß die Auswerteschaltung einen Mikrocomputer (28) aufweist,

daß die Dehnungsmeßstreifen (R 1,... R 24) an einen ersten Digital-Analog-Wandler (25) angeschlossen sind, der seinerseits mit dem Mikrocomputer (28) verbunden ist, und

daß die Neigungsmeßvorrichtung (26) an einen zweiten Analog-Digital-Wandler (27) angeschlossen ist, der seinerseits ebenfalls mit dem Mikrocomputer (28) verbunden ist.

5. Traktorwaage nach einem der Ansprüche 1 bis 4, dadurch gekennzeichnet,

daß der traktorseitige Rahmen (6) mit dem geräteseitigen Rahmen (5) lediglich durch drei, mit ihren Achsen an den Eckpunkten eines Dreiecks angeordnete Wägestäbe (7, 8, 9) verbunden ist.

6. Traktorwaage nach Anspruch 5, dadurch gekennzeichnet,

daß die Wägestäbe (7, 8, 9) derart angeordnet sind, daß deren Achsen die Eckpunkte eines gleichschenkligen Dreiecks bilden, und

daß die Spitze des gleichschenkligen Dreiecks durch einen Wägestab (8) gebildet wird, der in vertikaler Richtung oberhalb der anderen auf gleicher vertikaler Höhe angeordnet und die Dreiecksbasis festlegenden Wägestäbe (7, 9) angeordet ist.

7. Traktorwaage nach einem der Ansprüche 1 bis 6, dadurch gekennzeichnet,

daß die Wägestäbe als Scherstäbe (7, 8, 9) ausgebildet sind.

8. Traktorwaage nach Anspruch 7, dadurch gekennzeichnet, daß die Scherstäbe (7, 8, 9) einen im Querschnitt rechteckförmigen Erfassungsbereich (18) aufweisen, daß jeweils zwei Dehnungsmeßstreifen (R1, R2; R3, R4) auf sich gegenüberliegenden Flachseiten (20, 21) des Erfassungsbereiches (18) angeordnet sind, daß die vier Dehnungsmeßstreifen (R1, R2, R3, R4; R11, R12, R13, R14; R21, R22, R23, R24) eines jeden der drei Scherstäbe (7, 8, 9) in Wheatstone'scher Brückenschaltung angeordnet sind, und

daß die Ausgangssignale der Wheatstone'schen Brückenschaltung in einer Auswerteschaltung (24, 25) summiert werden.

9. Traktorwaage nach einem der Ansprüche 1 bis 8, dadurch gekennzeichnet,

daß die beiden Rahmen (5, 6) jeweils in einer vertikalen Ebene parallel zueinander angeordnet sind.

FIG.1

FIG.2　　FIG.3　　FIG.4

EP 0 407 705 A1

**FIG.5**

ZUM ANALOG/
DIGITAL-WANDLER 25

**FIG.6**

EP 0 407 705 A1

| SEITENANSICHT WÄGESTAB | | ART DER BELASTUNG | WIDERSTANDSÄNDERUNG | | | | BRÜCKEN-AUSGANGSSIGNAL |
|---|---|---|---|---|---|---|---|
| RECHTS | LINKS | | $\Delta R1$ | $\Delta R2$ | $\Delta R3$ | $\Delta R4$ | |
| A | | VERTIKALE KRAFTEINWIRKUNG | ⊖ | ⊕ | ⊖ | ⊕ | ⊖ |
| B | | AXIALE SCHUBKRAFT | ⊖ | ⊖ | ⊖ | ⊖ | / |
| C | | AXIALE ZUGKRAFT | ⊕ | ⊕ | ⊕ | ⊕ | / |
| D | | TORSIONSMOMENT | ⊕ | ⊖ | ⊖ | ⊕ | / |
| E | | HORIZONTALE SEITENKRAFT | ⊕ | ⊕ | ⊖ | ⊖ | / |

FIG.7

FIG.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 222 230 (DE DISSEL BEHEER) <br> * Zusammenfassung; Figuren 1-5 * <br> – – – | 1,5,6,9 | G 01 G 19/08 <br> B 60 P 5/00 |
| Y | DE-A-2 005 646 (ART'S-WAY) <br> * Figuren 1-7 * <br> – – – | 1 | |
| A | | 8 | |
| Y | DE-A-3 642 495 (MARTIN) <br> * Ansprüche 1-3; Figuren 1-3 * <br> – – – | 1 | |
| A | | 4 | |
| A | EP-A-0 303 325 (VAN DER LELY) <br> – – – | | |
| A | DE-A-3 714 642 (AMAZONEN-WERKE) <br> – – – – – | | |

| RECHERCHIERTE SACHGEBIETE (Int. Cl.5) |
|---|
| G 01 G <br> B 60 P |

Der vorliegende Recherchenbericht wurde für alle Patentansprüche erstellt

| Recherchenort | Abschlußdatum der Recherche | Prüfer |
|---|---|---|
| Berlin | 17 Oktober 90 | LUDWIG H J |